(19) Europäisches Patentamt / European Patent Office / Office européen des brevets

(11) **EP 3 611 029 A1**

(12) **EUROPEAN PATENT APPLICATION**
published in accordance with Art. 153(4) EPC

(43) Date of publication:
**19.02.2020  Bulletin 2020/08**

(21) Application number: **18783742.2**

(22) Date of filing: **06.04.2018**

(51) Int Cl.:
*B43K 8/14* (2006.01)    *B41K 1/54* (2006.01)
*B43K 8/02* (2006.01)    *B43M 11/06* (2006.01)
*C09D 7/41* (2018.01)    *C09D 11/17* (2014.01)
*C09D 201/00* (2006.01)  *G02B 5/30* (2006.01)
*B42D 25/364* (2014.01)

(86) International application number:
**PCT/JP2018/014670**

(87) International publication number:
**WO 2018/190253 (18.10.2018 Gazette 2018/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.04.2017  JP 2017080687**

(71) Applicant: **Zeon Corporation
Tokyo 100-8246 (JP)**

(72) Inventor: **KAWABATA, Koya
Tokyo 100-8246 (JP)**

(74) Representative: **Maiwald Patent- und
Rechtsanwaltsgesellschaft mbH
Elisenhof
Elisenstraße 3
DE-80335 München (DE)**

(54) **STATIONERY**

(57)    A stationery product for forming a marking for authenticity identification on an object, the stationery product including a fluid-state paint for authenticity identification, and a housing part which houses the paint, wherein the paint contains a color shift pigment whose reflection band wavelength changes corresponding to a viewing angle.

**FIG.1**

**Description**

Field

The present invention relates to a stationery product which is used to form a marking for authenticity identification on an object.

Background

In some cases, a marking which cannot be easily duplicated is formed on the surface of an article which is required to be authentic, in order to prevent forgery of an article (see Patent Literature 1). As such a marking, a color shift pigment has been used in some cases in prior art (see Patent Literature 2).

Citation List

Patent Literature

Patent Literature 1: Japanese Patent No 2960724 B
Patent Literature 2: U.S. Patent No 6793720

Summary

Technical Problem

The present inventor conducted research on applying the marking onto an object using a label. Specifically, the research was conducted on applying the marking onto an object by sticking a marking-printed label to an object. However, in general, sticking of a label may become difficult in some cases depending on the shape and material of the surface of an object to be stuck. Furthermore, in general, there is a limit in the minimum size of a label, and therefore an attempt to apply a small marking using a label was unsuccessful in some cases.

Patent Literature 1 has proposed formation of a marking by screen printing. Then the present inventor conducted research on directly forming a marking on an object using screen printing. However, there is a limit in the position of a marking to be formed on an object by screen printing. For example, it is difficult to form a marking in a narrow interstice. In addition, there is a necessity of preparation of a screen mask corresponding to the shape of a marking in screen printing. Therefore, when a marking having an optional shape is to be formed, the number of types of screen masks to be prepared becomes enormously large. Furthermore, it is difficult to form a marking at any time at necessity by screen printing. Therefore, there is generally a limit in a timing at which a marking is formed. Consequently, there is a demand for a technology which increases flexibility in the formation of a marking so that a user can form a marking having an optional shape at an optional timing in an optional position of an object.

Patent Literature 2 discloses a solid marking composition like a crayon containing a color shift pigment. Since such a solid marking composition can be optionally used with the hand of a user, a marking can be quickly formed at an optional timing. However, since this solid marking composition is in a solid state, the range of an applicable object is limited, and the flexibility of a marking is low. For example, when a minute marking is to be formed with the solid marking composition, it has been difficult to adjust the size, because the marking composition is in a solid state. Furthermore, since a solid marking composition is required to have a specific size or more in order to maintain the rigidity of the solid marking composition, it has been difficult to reduce the size. Therefore, an attempt to form a minute marking with the solid marking composition is hindered by the limit of the possible minimum size of the marking. Furthermore, for example, an attempt to form a marking with a solid marking composition on a sort of shapes and materials of an object may result in difficulty in forming the marking because of insufficiency in the adhesion force between the solid marking composition and the object.

The present invention has been devised in view of the aforementioned problem. An object of the present invention is to provide a stationery product which can form a marking for authenticity identification with high flexibility regarding position, timing, and shape.

Solution to Problem

The present inventor intensively conducted research for solving the aforementioned problem. As a result, the present inventor has found that application to a stationery product of a fluid-state paint containing a color shift pigment allows the user to form a marking for authenticity identification with high flexibility regarding position, timing, and shape. Thus, the present invention has been accomplished.

That is, the present invention includes the following.

<1> A stationery product for forming a marking for authenticity identification on an object, the stationery product comprising a fluid-state paint for authenticity identification, and a housing part which houses the paint, wherein the paint contains a color shift pigment whose reflection band wavelength changes corresponding to a viewing angle.

<2> The stationery product according to <1>, wherein the color shift pigment is a cholesteric pigment which contains a layer of a resin having cholesteric regularity.

<3> The stationery product according to <2>, wherein the cholesteric pigment has a single reflection band or multiple different reflection bands to the light perpendicular to the layer.

<4> The stationery product according to <3>, wherein the cholesteric pigment has one or more reflection bands containing at least the visible range and having a bandwidth of 100 nm or more.

<5> The stationery product according to any one of <1> to <4>, comprising an application part for applying the paint housed in the housing part onto the object.

<6> The stationery product according to <5>, wherein the application part includes a paint permeation part formed with a porous material, and

the paint permeates into the paint permeation part.

<7> The stationery product according to <5>, wherein the application part has a discharge port capable of discharging the paint when a pressure is applied to the housing part.

Advantageous Effects of Invention

According to the stationery product of the present invention, a marking for authenticity identification can be formed with high flexibility regarding position, timing, and shape.

Brief Description of Drawings

FIG. 1 is a perspective view schematically illustrating a dispenser as a stationery product according to a first embodiment of the present invention.

FIG. 2 is a perspective view schematically illustrating a marker as a stationery product according to a second embodiment of the present invention.

FIG. 3 is a perspective view schematically illustrating a stamp as a stationery product according to a third embodiment of the present invention.

FIG. 4 is a perspective view schematically illustrating a marking tool as a stationery product according to a fourth embodiment of the present invention.

FIG. 5 is a cross-sectional view schematically illustrating an example of an article obtained by forming a marking on an object.

Description of Embodiments

Hereinafter, the present invention will be described in detail with reference to embodiments and examples. However, the present invention is not limited to the following embodiments and examples, and may be freely modified for implementation without departing from the scope of claims of the present invention and the scope of their equivalents.

[Summary of stationery product]

The stationery product of the present invention is a tool which is used for forming a marking for authenticity identification on an object. This stationery product includes a fluid-state paint for authenticity identification and a housing part which houses the paint.

A user applies the paint housed in the housing part onto an object to form a marking. As described herein, "applying" a paint encompasses not only coating with a paint but also attaching a paint using a stamp or the like.

The paint included in the stationery product contains a color shift pigment. Therefore, a marking formed with the paint also contains the color shift pigment. The color shift pigment has a property that wavelength of the reflection band thereof changes corresponding to the viewing angle. Therefore, the recognized color of the color shift pigment usually changes corresponding to the viewing angle. Accordingly, upon viewing of the marking, when, e.g., the color of the pigment changes corresponding to the viewing angle, the object on which the marking has been formed can be judged to be an authentic article.

However, even when wavelength of the reflection band changes corresponding to the viewing angle, such change may not appear as a change in color depending on the type of the color shift pigment. Even in such a case, whether or not the object is an authentic article can be judged by an appropriate identification method corresponding to the type of the color shift pigment.

Also, with the stationery product, a user can easily form a marking of an optional shape such as a letter, a symbol, and a picture. Thus, a user can form a marking with high flexibility regarding shape.

Furthermore, the stationery product can generally be handled by a user in a simple manner. Therefore, with the aforementioned stationery product, a user can form a marking at an optional appropriate timing. Thus, a user can form a marking with high flexibility regarding timing.

Also, since a paint in a fluid state is used as the paint for use, a marking can be formed in an optional position of an object regardless of the shape of the object. For example, a marking can be easily formed in a position on which a marking is difficult to form with a solid marking composition such as a narrow interstice, a curved surface, and a rough surface. Thus, a user can form a marking with high flexibility regarding position.

Furthermore, with the fluid-state paint, size control can be easily performed, and the size of a marking can be optionally adjusted by the amount to be applied. Thus, a user can form a marking with high flexibility regarding size.

Also, by the addition of an appropriate binder in combination with the color shift pigment to the fluid-state paint, adhesion thereof to various types of materials with high adhesiveness can be achieved. Thus, a user can form a marking with high flexibility regarding material of an object.

[First embodiment]

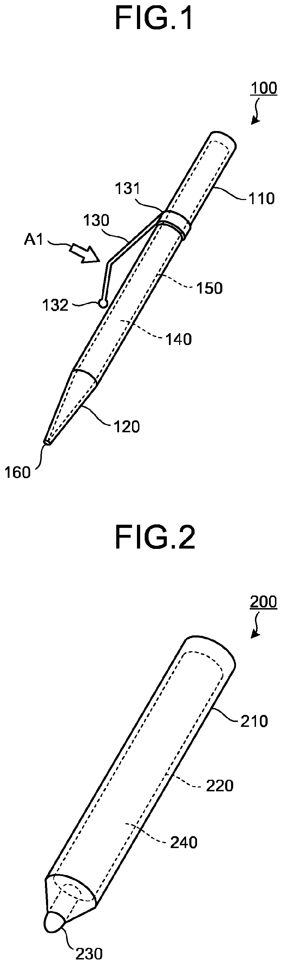

FIG. 1 is a perspective view schematically illustrating a dispenser 100 as a stationery product according to a first embodiment of the present invention.

As illustrated in FIG. 1, the dispenser 100 as a stationery product according to a first embodiment of the present invention includes a barrel part 110, a nozzle part 120 as an application part, a pressing tool 130, and a paint 140 for authenticity identification.

A housing part 150 as a room capable of housing fluid is formed inside the barrel part 110. The fluid-state paint 140 containing a color shift pigment is housed in this housing part 150.

The nozzle part 120 is in provided in a manner of being connected to the barrel part 110 such that it can apply the paint 140 housed in the housing part 150 inside the barrel part 110 onto an object (not illustrated). Further, a discharge port 160 is formed at a terminal end of the nozzle part 120. The discharge port 160 is formed in a manner of communicating with the housing part 150 inside the barrel part 110 such that the aforementioned paint 140 can be discharged through the discharge port 160.

The pressing tool 130 is a bent rod-shape member, and fixed to the barrel part 110 at its one end 131. The other end 132 of the pressing tool 130 is slightly separated from the barrel part 110.

When formation of a marking on an object using such a dispenser 100 is intended, a user presses the pressing tool 130 as indicated by arrow A1 in FIG. 1. Consequently, the side surface of the barrel part 110 is pressed by the other end 132 of the pressing tool 130, so that a pressure is applied to the housing part 150. When the pressure was applied to the housing part 150 in this manner, the paint 140 is discharged through the discharge port 160 by the applied pressure. This discharged paint 140 may be applied onto an object in a manner of drawing a desired shape, so that a marking is formed on the object.

With the aforementioned dispenser 100, a user can form a marking of an optional shape in an optional position of an object at an optional timing. Also, since the size of a marking can be optionally adjusted in the formation of a marking using this dispenser 100, there can be formed a marking which is smaller than that of prior art. Furthermore, a stable marking can be formed by appropriately adjusting components such as a binder contained in the paint 140 so that a color shift pigment strongly adheres to an object formed with a varied type of material. Consequently, according to the aforementioned dispenser 100, a marking for authenticity identification can be formed with high flexibility regarding position, timing, shape, size, and material of an object.

[Second embodiment]

FIG. 2 is a perspective view schematically illustrating a marker 200 as a stationery product according to a second embodiment of the present invention.

As illustrated in FIG. 2, the marker 200 as a stationery product according to a second embodiment of the present invention includes a shaft tube 210, a housing part 220 disposed inside the shaft tube 210, a tip part 230 as an application part and a paint permeation part, and a paint 240 for authenticity identification.

**EP 3 611 029 A1**

The housing part 220 as a container capable of housing a fluid is disposed inside the shaft tube 210. The fluid-state paint 240 containing a color shift pigment is housed in this housing part 220.

The tip part 230 is formed with a porous material such as felt. The tip part 230 is connected to the housing part 220 so that the paint 240 housed in the housing part 220 permeates into the tip part 230 by the function of capillarity. Furthermore, the terminal end of the tip part 230 is provided in a manner of projecting from the shaft tube 210 such that the paint 240 having permeated into the tip part 230 can be applied onto an object (not illustrated).

When formation of a marking on an object using such a marker 200 is intended, a user brings the tip part 230 into contact with an object in a manner of drawing a desired shape. Consequently, the paint 240 having permeated into the tip part 230 can be applied onto the object, and thereby a marking can be formed on the object.

With the aforementioned marker 200, the same advantage as that in the first embodiment can be usually obtained.

[Third embodiment]

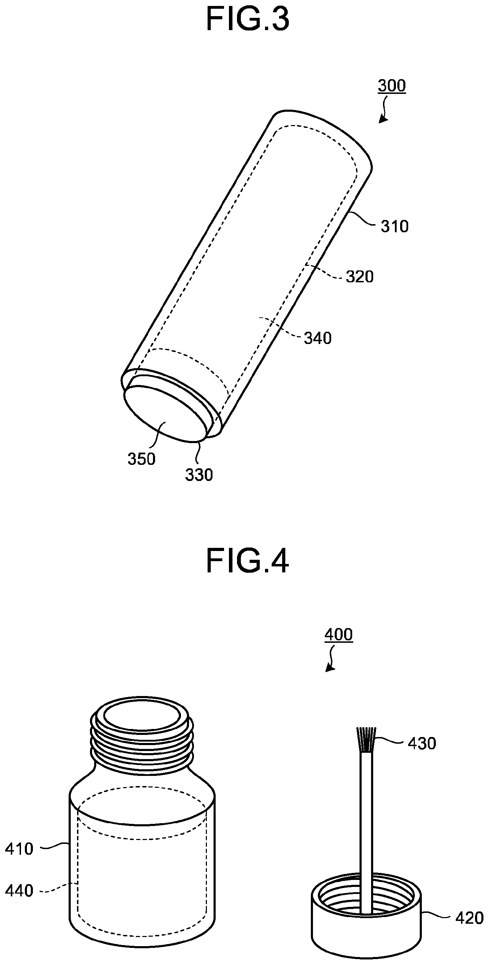

FIG. 3 is a perspective view schematically illustrating a stamp 300 as a stationery product according to a third embodiment of the present invention.

As illustrated in FIG. 3, the stamp 300 as a stationery product according to the third embodiment of the present invention includes a stamp base body 310, a housing part 320 disposed in the stamp base body 310, a printing body 330 as an application part and a paint permeation part, and a paint 340 for authenticity identification.

The housing part 320 as a container capable of housing a fluid is disposed inside the stamp base body 310. The fluid-state paint 340 containing a color shift pigment is housed in this housing part 320.

The printing body 330 is formed with a porous material such as felt. The printing body 330 is connected to the housing part 320, so that the paint 340 housed in the housing part 320 permeates into the printing body 330 by the function of capillarity. Furthermore, the printing body 330 has a printing face 350 having a shape corresponding to a desired marking. Specifically, the printing face 350 contains a relatively projecting attachment part (not illustrated) and a relatively sinking non-attachment part (not illustrated), and the shape of the attachment part corresponds to the shape of a marking. The printing face 350 is provided in a manner of projecting from the stamp base body 310 such that the paint 340 having permeated into the printing body 330 can be applied onto an object (not illustrated).

When formation of a marking on an object using such a stamp 300 is intended, a user brings the printing face 350 into contact with an object. Consequently, the attachment part of the printing face 350 becomes in contact with the object, while the non-attachment part of the printing face 350 does not become in contact with the object, whereby the paint 340 having permeated into the printing body 330 is applied onto the object in such a manner that the shape of the attachment part is transferred. As a result, a marking can be formed on the object.

With the aforementioned stamp 300, the same advantage as the first embodiment can be usually obtained. Usually, the shape of a marking formed using the stamp 300 is limited to the shape corresponding to the shape of the printing face 350. However, since the printing body 330 can be usually easily replaced, the flexibility regarding the shape of a marking is high.

[Fourth embodiment]

FIG. 4 is a perspective view schematically illustrating a marking tool 400 as a stationery product according to a fourth embodiment of the present invention.

As illustrated in FIG. 4, the marking tool 400 as a stationery product according to a fourth embodiment of the present invention includes a container 410 as a housing part, a cap 420 of the container 410, a brush part 430 as an application part, and a paint 440 for authenticity identification.

The fluid-state paint 440 containing a color shift pigment is housed in the container 410.

The brush part 430 is provided such that the brush part 430 is housed inside the container 410 when the cap 420 is closed. Accordingly, the paint 440 housed in the container 410 adheres to the brush part 430.

When formation of a marking on an object using the aforementioned marking tool 400 is intended, a user brings the brush part 430 into contact with an object in a manner of drawing a desired shape. Consequently, the paint 440 having adhered to the brush part 430 can be applied onto the object to thereby form a marking on the object.

With the aforementioned marking tool 400, the same advantage as that in the first embodiment can be usually obtained.

[Other embodiments]

A variety of embodiments other than the stationery products described in the first to fourth embodiments may be adopted as the stationery products.

5

Examples thereof may include a stationery product not including an application part such as a vermillion ink pad (a stamp pad for stamping a red seal) and a stamp pad. A vermillion ink pad or a stamp pad usually includes a container as a housing part, an ink pad housed in the container, and a paint having permeated into this ink pad to be retained. In this case, a seal or a stamp to function as an application part for applying a paint onto an object may be used in combination with the aforementioned vermillion ink pad or stamp pad for forming a marking.

[Color shift pigment]

A color shift pigment is a pigment whose reflection band wavelength changes corresponding to the viewing angle. Such a color shift pigment is a special pigment, and is not readily available. Therefore, a marking formed with a paint containing this color shift pigment enables authenticity identification.
As the aforementioned color shift pigment, a cholesteric pigment is preferable. A cholesteric pigment is a pigment which contains a layer of a resin having cholesteric regularity. In the following description, a resin having cholesteric regularity may be appropriately referred to as a "cholesteric resin". As described herein, the cholesteric regularity is a structure in which the angle of molecular axes in stacking planes are shifted (twisted) as the planes are observed sequentially passing through the stacked planes, such that molecular axes in a certain first plane are oriented in a certain direction, molecular axes in a subsequent plane stacking on the first plane are oriented in a direction shifted by a small angle with respected to that of the first plane, and molecular axes in still another plane are oriented in a direction of a further shifted angle. A structure in which the direction of molecular axes twists in this manner is usually a helical structure, and is thus an optically chiral structure. In such a chiral structure, there occurs a phenomenon referred to as blueshift that is a shift of the reflection band to the short wavelength side as the viewing angle formed by the viewing direction to the normal line of a layer increases.
Examples of the cholesteric resin to be used may include a cured product of a cholesteric liquid crystal composition. For the sake of convenience, a material referred to herein as a "liquid crystal composition" encompasses not only a mixture of two or more substances but also a material constituted by a single material. The cholesteric liquid crystal composition refers to a composition which contains a liquid crystal compound capable of expressing a liquid crystal phase having cholesteric regularity (cholesteric liquid crystal phase) when the liquid crystal compound is oriented. When the cholesteric liquid crystal composition is cured, usually the liquid crystal compound is polymerized in the state of expressing a cholesteric liquid crystal phase, and thereby there can be obtained a layer of a non-liquid crystal cholesteric resin having been cured while retaining the cholesteric regularity.
The layer of the cholesteric resin usually has a circularly polarized light separation function. That is, it has a nature of allowing to pass therethrough one of clockwise circularly polarized light and counterclockwise circularly polarized light, and reflecting a portion or the entirety of the other. In the reflection in the layer of the cholesteric resin, circularly polarized light is reflected while retaining its chirality. In the following description, a wavelength range in which the circularly polarized light separation function is exerted in this manner may be referred to as a "selective reflection band". When this selective reflection band is adjusted, a cholesteric pigment can reflect circularly polarized light having a color corresponding to the selective reflection band. Therefore, the color arrangement of a marking can be optionally adjusted by adjusting the selective reflection band.
The specific wavelength for exerting the circularly polarized light separation function generally depends on the pitch of the helical structure in the layer of the cholesteric resin. The pitch of the helical structure is a distance in a plane normal line direction from a plane to the returning plane where the direction of molecular axes in the helical structure returns to the original direction of molecular axes as a result of shift of angles little by little as proceeding through planes. By changing the magnitude of this pitch of the helical structure, the wavelength in which the circularly polarized light separation function is exerted can be changed. In particular, when the magnitude of the pitch of the helical structure continuously varies in the layer, the circularly polarized light separation function over a wide band can be obtained by a single layer of a cholesteric resin.
Specifically, when the helical axis representing a rotation axis around which molecular axes twist in the helical structure is parallel to the normal line of the layer of the cholesteric resin, the pitch p of the helical structure and the wavelength $\lambda$ of reflected circularly polarized light usually have the relationship of the formula (X) and formula (Y).

$$\text{Formula (X): } \lambda_c = n \times p \times \cos \theta$$

$$\text{Formula (Y): } n_o \times p \times \cos \theta \leq \lambda \leq n_e \times p \times \cos \theta$$

In the formula (X) and the formula (Y), $\lambda_c$ indicates the center wavelength of the selective reflection band (hereinafter, this may be referred to as the "selective reflection center wavelength"), $n_o$ indicates the refractive index in the minor axis direction of the liquid crystal compound, $n_e$ indicates the refractive index in the major axis direction of the liquid crystal compound, n indicates $(n_e + n_o)/2$, p indicates the pitch of the helical structure, and 0 indicates the incident angle of light (an angle formed with the normal line of a plane).

Therefore, the selective reflection center wavelength $\lambda_c$ depends on the pitch p of the helical structure of the polymer in the layer of the cholesteric resin. The selective reflection band can be changed by changing this pitch p of the helical structure. Accordingly, the pitch p of the helical structure is preferably set corresponding to the wavelength of circularly polarized light which is desired to be reflected on the layer of the cholesteric resin. Examples of the method for adjusting the pitch p may include a publicly known method described in Japanese Patent Application Laid-Open No. 2009-300662 A. Specific examples may include a method of adjusting the type or amount of the chiral agent in the cholesteric liquid crystal composition.

Examples of the layer of the cholesteric resin as a cured product of the cholesteric liquid crystal composition may include those described in Japanese Patent Application Laid-Open No. 2015-27743 A.

Since the cholesteric pigment contains the layer of the cholesteric resin, it usually has a single selective reflection band or multiple different selective reflection bands to the light perpendicular to the layer of the cholesteric resin. The light perpendicular to the layer refers to light traveling in the thickness direction of the layer. When the cholesteric pigment has multiple selective reflection bands, one type of cholesteric pigment may have multiple selective reflection bands. Alternatively, multiple types of cholesteric pigments each having a different selective reflection band may be used, so that the entirety of the cholesteric pigments contained in the paint may have multiple selective reflection bands.

In particular, the cholesteric pigment preferably has a selective reflection band containing at least the visible range. That is, at least a portion of the selective reflection band of the cholesteric pigment is in the visible range. Furthermore, the cholesteric pigment preferably has one or more selective reflection bands which contain at least the visible range and have a specific bandwidth or more. The aforementioned bandwidth is preferably 100 nm or more, preferably 200 nm or more, and particularly preferably 400 nm or more. Furthermore, the selective reflection band possessed by the cholesteric pigment more preferably has the aforementioned specific bandwidth or more in the visible range. By having such a selective reflection band, the reflected light amount per a single pigment can be increased, and a marking of a design having higher design potential and visual recognizability can be formed.

The particle shape of the color shift pigment may be any shape. The cholesteric pigment is usually produced by forming a layer of the cholesteric resin and pulverizing the layer of the cholesteric resin. Therefore, the cholesteric pigment usually has a shape of flakes.

The average particle diameter of the color shift pigment is preferably 1 $\mu$m or more from the viewpoint of achieving decorative properties, and preferably 500 $\mu$m or less, more preferably 100 $\mu$m or less from the viewpoint of achieving favorable paint application properties.

The average particle diameter of the color shift pigment may be measured by the following method. First, several sieves each having a different opening are used to measure the ratio of the pigment passing through the sieves having the corresponding openings. Then, from the size of the opening and the ratio of the pigment passing through the sieve having the opening, the particle diameter distribution of the pigment is expressed in terms of integrated weight percentage. The particle diameter at 50% in the integrated value of weight in the particle diameter distribution is calculated as the average particle diameter.

The method for producing the color shift pigment may be any method. For example, a cholesteric pigment may be produced by a method including a step of forming a layer of the cholesteric resin and a step of pulverizing the formed layer of the cholesteric resin. As a specific manufacturing method, for example, a method described in Japanese Patent Application Laid-Open No. 2015-27743 A may be used.

[Paint]

The paint is a fluid-state material containing the color shift material. Herein, the fluid state includes not only a low-viscosity liquid state but also a high-viscosity gel state. The specific viscosity of the paint may be appropriately adjusted depending on the shape and size of a marking to be formed.

Usually, the paint contains a dispersion medium, and the color shift pigment is dispersed in the dispersion medium. For example, an inorganic solvent such as water may be used as the dispersion medium, but an organic solvent is usually used. Examples of the organic solvent may include organic solvents such as a ketone compound, an alkyl halide compound, an amide compound, a sulfoxide compound, a heterocyclic compound, a hydrocarbon compound, an ester compound, and an ether compound. Among these, a ketone compound is preferable in consideration of environmental load. As the dispersion medium, one type thereof may be solely used, and two or more types thereof may also be used in combination at any ratio.

The amount of the dispersion medium is usually 40 parts by weight or more, preferably 60 parts by weight or more, and more preferably 80 parts by weight or more, and is usually 1,000 parts by weight or less, preferably 800 parts by weight or less, and more preferably 600 parts by weight or less, relative to 100 parts by weight of the color shift pigment. By adjusting the amount of the dispersion medium within the aforementioned range, it is possible to improve the paint application properties.

Further, the paint may contain a binder for binding the color shift pigment after drying the dispersion medium. As the binder, a polymer is usually used. Examples of the polymer may include a polyester-based polymer, an acryl-based polymer, a polystyrene-based polymer, a polyamide-based polymer, a polyurethane-based polymer, a polyolefin-based polymer, a polycarbonate-based polymer, and a polyvinyl-based polymer. As the binders, one type thereof may be solely used, and two or more types thereof may also be used in combination at any ratio.

The amount of the binder is usually 20 parts by weight or more, preferably 40 parts by weight or more, and more preferably 60 parts by weight or more, and is usually 1,000 parts by weight or less, preferably 800 parts by weight or less, and more preferably 600 parts by weight or less, relative to 100 parts by weight of the color shift pigment. By adjusting the amount of the binder within the aforementioned range, it is possible to improve the paint application properties. Further, the color shift pigment can be stably bound after the dispersion medium is dried.

Furthermore, the paint may contain an optional component in addition to the color shift pigment, the dispersion medium, and the binder. Examples of the optional component may include an antioxidant, an ultraviolet absorber, a light stabilizer, and a bluing agent. As these components, one type thereof may be solely used, and two or more types thereof may also be used in combination at any ratio.

Further, the paint may contain a monomer of the polymer instead of the polymer as the binder or in combination with the polymer. In this case, a layer containing the color shift pigment and the binder may be produced by applying the paint onto a substrate, drying it, and polymerizing the monomer. However, when it contains a monomer, it is preferable that the paint contains a polymerization initiator.

[Method for identifying authenticity by marking formed with cholesteric pigment]

The marking formed with the aforementioned stationery product contains a special pigment, i.e., a color shift pigment. As the wavelength of the reflection band of this color shift pigment changes corresponding to the viewing angle, the color thereof usually changes corresponding to the viewing angle. Thus, upon the viewing of the marking, authenticity can be identified on the basis of whether or not the color changes depending on the viewing angle.

Particularly, when a cholesteric pigment is used as the color shift pigment, authenticity can be identified by the circularly polarized light separation function possessed by the cholesteric pigment. Hereinafter, a method for identifying authenticity by a marking formed with a paint containing the cholesteric pigment will be described by referring to examples.

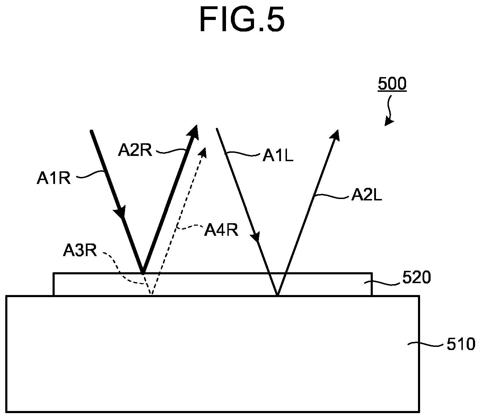

FIG. 5 is a cross-sectional view schematically illustrating an example of an article 500 obtained by forming a marking 520 on an object 510. FIG. 5 schematically illustrates paths of light reflected on the object 510 and the marking 520. In an actual article, various absorptions and reflections of light other than those described in the following may occur. However, in the following description, major paths of light will be schematically described for the sake of convenience of explanation about the function. In an example illustrated in FIG. 5, the marking 520 is formed with a paint containing a cholesteric pigment which reflects a portion of clockwise circularly polarized light in the visible range (specifically, light in the selective reflection band), and allow to pass a portion of the remainder of clockwise circularly polarized light and the entirety of counterclockwise circularly polarized light.

When clockwise circularly polarized light A1R enters the top surface of the marking 520 of the article 500 illustrated in FIG. 5, a portion thereof is reflected on the cholesteric pigment (not illustrated) in the marking 520 to become reflected light A2R, and a portion of the remainder becomes transmitted light A3R. Although reflection can occur not only on the surface of the marking 520 but also inside the marking 520, as a schematic illustration, the reflection is illustrated in FIG. 5 as occurring on the surface of the marking 520. The transmitted light A3R reaches the top surface of the object 510, which is located on the lower side of the marking 520. A portion thereof is absorbed there, and a portion of the remainder is reflected. The reflected light exits as reflected light A4R.

On the other hand, when counterclockwise circularly polarized light A1L enters the top surface of the marking 520, the entirety thereof reaches the top surface of the object 510, which is located on the lower side of the marking 520. A portion thereof is absorbed there, and a portion of the remainder is reflected. The reflected light exits as reflected light A2L.

Examples of an operation for authenticity identification by the marking 520 having such an action may include the following operations (I) and (II).

(I) With light including both clockwise circularly polarized light and counterclockwise circularly polarized light as incident light, the following images viewed are compared:

(I-R) an image of the marking 520 viewed through a filter which allows to pass therethrough only clockwise circularly polarized light, and

(I-L) an image of the marking 520 viewed through a filter which allows to pass therethrough only counterclockwise circularly polarized light.

(II) The following images viewed are compared;
(II-R) an image of the marking 520 viewed with light including only clockwise circularly polarized light as incident light, and
(II-L) an image of the marking 520 viewed with light including only counterclockwise circularly polarized light as incident light.

In the operation (I), non-polarized light such as natural light may be used as incident light. When the marking 520 illuminated with such incident light is viewed through a filter which allows to pass therethrough only clockwise circularly polarized light (in the case of (I-R)), a viewer views the reflected light A2R and A4R of clockwise circularly polarized light. Therefore, the marking 520 is viewed as a layer which reflects light by the cholesteric pigment. Thus, the marking 520 is mainly viewed with the color based on the reflection in the cholesteric pigment, and the shape or pattern of the marking 520 is viewed as an image.

On the other hand, when the marking 520 illuminated with the incident light is viewed through a filter which allows to pass therethrough only counterclockwise circularly polarized light (in the case of (I-L)), a viewer views the reflected light A2L of counterclockwise circularly polarized light. Therefore, the marking 520 is viewed as a transparent layer. Thus, the marking 520 is not viewed with the color based on the reflection in the cholesteric pigment, and an image without the shape or pattern of the marking 520 is viewed.

Consequently, when such a difference is observed between the viewed images, the article 500 having this marking 520 can be judged to be authentic. When such a difference is not observed, the article can be judged to be non-authentic.

In the operation (II), when the marking 520 is viewed with light including only clockwise circularly polarized light as incident light (in the case of (II-R)), an image based on only clockwise circularly polarized light is viewed, and the same image as in the aforementioned case of (I-R) is viewed. On the other hand, when the marking 520 is viewed with light including only counterclockwise circularly polarized light as incident light (in the case of (II-L)), an image based on only counterclockwise circularly polarized light is viewed, and the same image as in the aforementioned case of (I-L) is viewed. Therefore, the authenticity can be identified in the same manner as the operation (I).

[Object]

The object as a target to which a marking is to be formed with the aforementioned stationery product is not limited, and various articles may be adopted. Examples of the object may include fabric products such as clothes; leather products such as bags and shoes; metal products such as screws; paper products such as price tags; and rubber products such as tires. However, the object is not limited to these examples.

Reference Sign List

    100    dispenser
    110    barrel part
    120    nozzle part
    130    pressing tool
    131    one end of pressing tool
    132    other end of pressing tool
    140    paint
    150    housing part
    200    marker
    210    shaft tube
    220    housing part
    230    tip part
    240    paint
    300    stamp
    310    stamp base body
    320    housing part
    330    printing body

340     paint
350     printing face
400     marking tool
410     container
420     cap
430     brush part
440     paint
500     article
510     object
520     marking

**Claims**

1. A stationery product for forming a marking for authenticity identification on an object, the stationery product comprising a fluid-state paint for authenticity identification, and a housing part which houses the paint, wherein the paint contains a color shift pigment whose reflection band wavelength changes corresponding to a viewing angle.

2. The stationery product according to claim 1, wherein the color shift pigment is a cholesteric pigment which contains a layer of a resin having cholesteric regularity.

3. The stationery product according to claim 2, wherein the cholesteric pigment has a single reflection band or multiple different reflection bands to the light perpendicular to the layer.

4. The stationery product according to claim 3, wherein the cholesteric pigment has one or more reflection bands containing at least the visible range and having a bandwidth of 100 nm or more.

5. The stationery product according to any one of claims 1 to 4, comprising an application part for applying the paint housed in the housing part onto the object.

6. The stationery product according to claim 5, wherein the application part includes a paint permeation part formed with a porous material, and the paint permeates into the paint permeation part.

7. The stationery product according to claim 5, wherein the application part has a discharge port capable of discharging the paint when a pressure is applied to the housing part.

# FIG.1

# FIG.2

# FIG.3

# FIG.4

# FIG.5

## INTERNATIONAL SEARCH REPORT

| International application No. |
| --- |
| PCT/JP2018/014670 |

| A. CLASSIFICATION OF SUBJECT MATTER |
| --- |
| Int. Cl. B43K8/14(2006.01)i, B41K1/54(2006.01)i, B43K8/02(2006.01)i, B43M11/06(2006.01)i, C09D7/41(2018.01)i, C09D11/17(2014.01)i, C09D201/00(2006.01)i, G02B5/30(2006.01)i, B42D25/364(2014.01)n |
| According to International Patent Classification (IPC) or to both national classification and IPC |

| B. FIELDS SEARCHED |
| --- |
| Minimum documentation searched (classification system followed by classification symbols) |
| Int. Cl. B43K8/14, B41K1/54, B43K8/02, B43M11/06, C09D7/41, C09D11/17, C09D201/00, G02B5/30, B42D25/364, B05C17/00 |

| Documentation searched other than minimum documentation to the extent that such documents are included in the fields searched |
| --- |
| Published examined utility model applications of Japan     1922-1996 |
| Published unexamined utility model applications of Japan   1971-2018 |
| Registered utility model specifications of Japan           1996-2018 |
| Published registered utility model applications of Japan   1994-2018 |

| Electronic data base consulted during the international search (name of data base and, where practicable, search terms used) |
| --- |
|  |

| C. DOCUMENTS CONSIDERED TO BE RELEVANT |  |  |
| --- | --- | --- |
| Category* | Citation of document, with indication, where appropriate, of the relevant passages | Relevant to claim No. |
| X | JP 2003-253187 A (SAKURA COLOR PROD CORP.) 10 September 2003, paragraphs [0006], [0015], [0041] (Family: none) | 1-7 |
| X | JP 2001-234108 A (MITSUBISHI PENCIL CO.) 28 August 2001, paragraphs [0009], [0011], [0033], [0040] (Family: none) | 1-5 |
| X | US 2007/0082977 A1 (SHIBAHASHI, Yutaka) 12 April 2007, paragraphs [0016], [0023]-[0027], [0049]-[0052], [0071], fig. 2 (Family: none) | 1-6 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15.05.2018 | 29.05.2018 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2018/014670 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-517968 A (SICPA HOLDING SA) 17 June 2004, paragraph [0002] & US 2003/0056688 A1, paragraph [0002] & WO 011/79365 A1 & EP 1146098 A1 & AT 461982 T & AU 6020801 A & BR 01110011 A & CA 2405199 A1 & CN 1423681 A & DK 1272577 T3 & ES 2341940 T3 & HK 1056192 A1 & MX PA02010154 A & PT 1272577 E & RU 2264425 C2 | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2960724 B
- US 6793720 B
- JP 2009300662 A
- JP 2015027743 A